# EUROPÄISCHE PATENTSCHRIFT

(11) **EP 0 715 078 B1**
(45) Veröffentlichungstag und Bekanntmachung des Hinweises auf die Patenterteilung: **07.11.2001**
(21) Anmeldenummer: 96101866.0
(22) Anmeldetag: 09.02.1996
(51) Int. Cl.: F04C 2/18, F01C 21/02

(54) **Zahnradpumpe**
Gear Pump
Pompe à engrenages

(43) Veröffentlichungstag der Anmeldung: 05.06.1996
(73) Patentinhaber: Maag Pump Systems Textron AG, 8023 Zürich (CH)
(72) Erfinder: Blume, Peter, Dr., CH-8051 Zürich (CH); Stehr, Roger, CH-8180 Bülach (CH)
(74) Vertreter: Troesch Scheidegger Werner AG

(56) Entgegenhaltungen:
- EP-A- 0 090 281
- DE-B- 1 293 022
- DE-C- 349 786

## Beschreibung

Die vorliegende Erfindung betrifft eine Zahnradpumpe der im Oberbegriff von Anspruch 1 spezifizierten Art.

Bei gleitgelagerten Zahnradpumpen, wie z.B. in der DE 1293022B offenbart ist, insbesondere für Newtonsche und strukturviskose Medien, stellt die Lagertemperatur eine drehzahl- und damit durchsatzbegrenzende Grösse dar. Dies gilt ganz ausgesprochen dann, wenn das Gleitlager Fördermedium-geschmiert ist. Dem wird in der Regel mit einer Kühlung der Rotorwelle entgegengetreten, wodurch der betreibbare Drehzahlbereich ausgeweitet wird. Selbstverständlich ist es ebenfalls möglich, anstelle der Welle die Gleitlagerbüchse, pumpengehäuseseitig, zu kühlen.

Hierbei ergibt sich aber das Problem, den Kühlmittelstrom bzw., genereller, Temperiermediumstrom dem Lagerbereich zuund vom Lagerbereich wieder abzuführen, sei dies wellen- oder gehäuseseitig. Wird das Medium gehäuseseitig zugeführt, so besteht das Problem, dass bei Lagerbüchsen, die aus Gründen einfacherer Axialspieleinstellung im Rahmen des Fertigungsspiels relativ lose im Gehäuse und lediglich verdrehsicher angeordnet sind, die Temperiermediumzuführung bzw. -wegführung über dichte Anschlussstellen erfolgen muss.

Es ist Aufgabe der vorliegenden Erfindung, dieses Problem zu lösen. Dies wird bei der Zahnradpumpe der eingangs genannten Art durch deren Ausbildung nach dem Kennzeichen von Anspruch 1 erreicht.

Dadurch, dass die Gleitlagerbüchse sich einteilig axial an bzw. in die Pumpenaussenumgebung erstreckt, wo die Ein- und Auslässe für ein an der Gleitlagerbüchse vorgesehenes Temperiermedium-Leitungssystem vorgesehen sind, fallen die erwähnten Dichtungsprobleme weg, und die Lagerbüchsen können bezüglich Lagerspiel unter Befolgung weit geringerer Toleranzen und damit wesentlich kostengünstiger gefertigt werden.

Dem Wortlaut von Anspruch 2 folgend, wird dabei in einer weitaus bevorzugten Ausführungsform die Gleitlagerung der Pumpenwelle Fördermedium-geschmiert.

Dabei kann, dem Wortlaut von Anspruch 3 folgend, die Welle durch das Gleitlager hindurch in die Pumpenumgebung durchgeführt sein, oder aber es kann die Gleitlagerbüchse als Abschlussdeckel der Wellenlagerbohrung ausgebildet sein.

In bevorzugter Art und Weise erstreckt sich das Temperiermedium-Leitungssystem mäanderförmig entlang des Lagerbereiches der Lagerbüchse und ist dabei, weiter bevorzugterweise, wie in Anspruch 5 oder wie in Anspruch 6 spezifiziert gebaut.

Ist die Zahnradpumpe gemäss Wortlaut von Anspruch 7 so ausgebildet, dass die angesprochene gleitgelagerte Welle in die Umgebung durchgeführt ist, so schliesst sich an den Gleitlagerbereich an der Gleitlagerbüchse, an letzterer, ein Dichtungsbereich an, vorzugsweise als Labyrinthdichtungsbereich ausgebildet. Dabei kann das Labyrinth entweder in die Gleitlagerbüchse und/oder in die Welle eingearbeitet sein.

Je nachdem, ob an der erfindungsgemässen Zahnradpumpe die angesprochene gleitgelagerte Welle nach aussen durchgeführt ist oder nicht, geht sie bevorzugterweise, dem Wortlaut von Anspruch 8 entsprechend, einteilig in einen auskragenden Montageflansch mit bzw. ohne Durchführungsbohrung für die Welle über.

Damit bei Fördermedium-geschmierter Gleitlagerung der Schmierstrom wieder in den Förderstrom der Zahnradpumpe zurückgeführt werden kann, wird, dem Wortlaut von Anspruch 9 entsprechend, in der Büchse eine im wesentlichen radial gerichtete Bohrung durch diese hindurch vorgesehen und mit dem Förderraum der Pumpe verbunden.

In den meisten Fällen wird nicht nur einer der Rotoren einseitig, wie ausgeführt, gleitgelagert, sondern mindestens einseitig beide Rotoren. Ueblicherweise werden die Rotoren beidseitig gleichermassen gleitgelagert sein. In diesem Fall wird, dem Wortlaut von Anspruch 10 folgend, vorgeschlagen, dass mindestens einseitig beide Wellen der Rotoren in je einer der erwähnten Lagerbüchsen gelagert sind, die sich gegenseitig gegen Verdrehung sichern.

Sind dabei die Gleitlager Fördermedium-geschmiert, so werden die erwähnten, im wesentlichen radial durch die Lagerbüchsen gerichteten Rückführungsbohrungen an den beiden Lagerbüchsen gemäss Anspruch 11 so vorgesehen, dass sie ineinander münden und gemeinsam mit dem Pumpenförderraum kommunizieren, was bevorzugterweise gemäss Wortlaut von Anspruch 12 realisiert wird.

Die Erfindung wird anschliessend beispielsweise anhand von Figuren erläutert.

Es zeigen:
- Fig. 1: schematisch, einen Querschnitt durch den Gleitlagerbereich einer erfindungsgemässen Zahnradpumpe, woran die Welle in die Umgebung durchgeführt ist;
- Fig. 2: schematisch, die Abwicklung der erfindungsgemäss vorgesehenen Gleitlagerbüchse zur Erläuterung einer bevorzugten Ausführungsform des vorgesehenen Temperiermedium-Leitungssystems;
- Fig. 3: schematisch, in Darstellung analog zu Fig. 1, eine weitere Ausführungsform der an einer erfindungsgemässen Zahnradpumpe gleitgelagerten, nicht durchgeführten Welle;
- Fig. 4: in analoger Darstellung, eine weitere Ausführungsform der Wellengleitlagerung an einer erfindungsgemässen Zahnradpumpe;
- Fig. 5: schematisch und in Aufsicht, die Anordnung zweier erfindungsgemäss vorgesehener Gleitlagerbüchsen zur Gleitlagerung der einseitigen Wellen beider Zahnradrotoren bei Fördermedium-geschmierten Gleitlagern;
- Fig. 6: einen Querschnitt durch eine an der erfindungsgemässen Zahnradpumpe vorgesehene Gleitlagerbüchse mit integriertem, mäanderförmigem Temperiermedium-Leitungssystem.

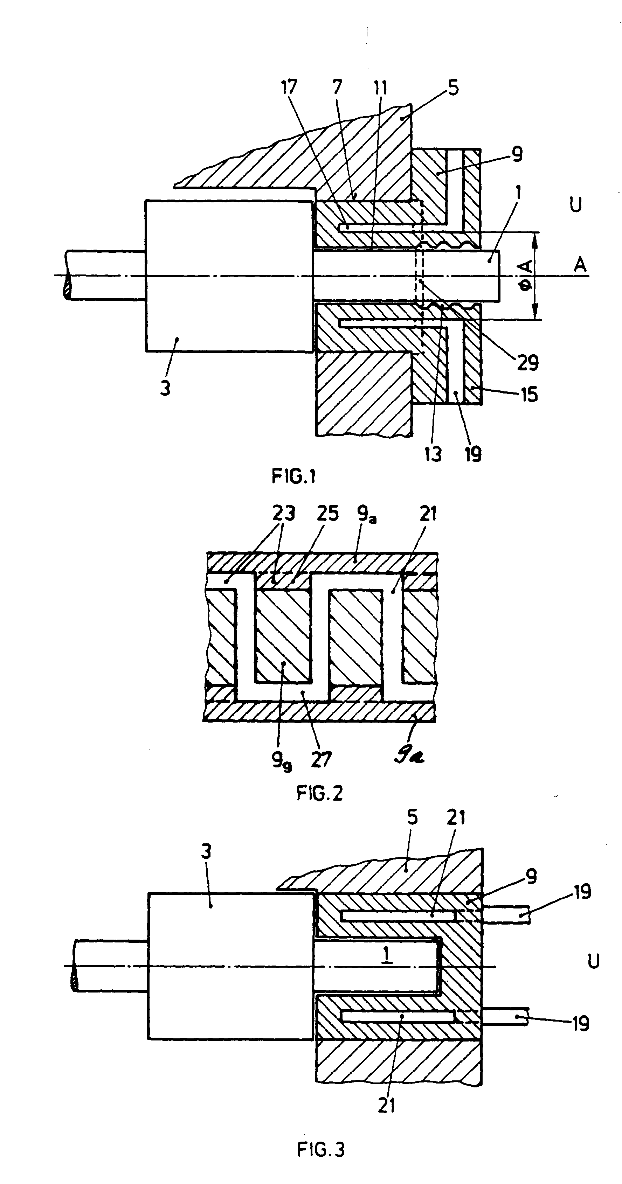

Gemäss Fig. 1 ist die Welle 1 eines Zahnradrotors 3 einer erfindungsgemässen Zahnradpumpe durch das Gehäuse 5 durchgeführt. In der Durchführungsbohrung 7 des Gehäuses sitzt eine Gleitlagerbüchse 9. Ihre Bohrung weist einen Lagerbereich 11 sowie einen Dichtungsbereich 13 auf, wie dargestellt bevorzugterweise als Labyrinthdichtungsbereich ausgebildet. Die Gleitlagerbüchse 9 kommuniziert einteilig mit der Pumpenumgebung U. In der in Fig. 1 dargestellten Ausführungsform ist an ihr ein endständiger Flansch 15 angeformt, der (nicht dargestellt) mit dem Gehäuse 5 lösbar verbunden, wie beispielsweise verschraubt ist. Insbesondere entlang des Lagerbereiches 11 ist in der Gleitlagerbüchse 9 ein Temperiermedium-Leitungssystem 17 vorgesehen, mit Zu- und Wegführanschlüssen 19 in der Umgebung U für das Temperiermedium. Damit bildet die Gleitlagerbüchse 9 gleichzeitig auch Deckel für die Wellendurchführung.

In Fig. 2 ist schematisch die Abwicklung der Lagerbüchse 9 bezüglich der Wellenachse A dargestellt, zur Erläuterung einer bevorzugten Konstruktion des mäanderförmigen Temperiermedium-Leitungssystems 17. Die Abwicklung entspricht einem Schnitt entsprechend der Zylinderschnittfläche nach Φ_{A} der Lagerbüchse 9 von Fig. 1.

Wie aus Fig. 2 ersichtlich, besteht die Lagerbüchse 9 einerseits aus einem Grundkörper 9_{g} sowie, stirnseitig, aus zwei ringförmigen Abschlussplatten 9ₐ. Im Grundkörper werden vorerst durchgehende Bohrungen 21 durchgebohrt und stirnseitig des Grundkörpers 9_{g} beispielsweise je eine umlaufende, ringförmige, jeweilige Ausmündungen der Bohrungen 21 verbindende Nut 23. Daraufhin werden die Abschlussplatten aufgelegt und mit dem Grundkörper 9_{g} beispielsweise verschweisst. Sie verschliessen abwechselnd, wie dargestellt in Fig. 2, jeweils die Verbindungsnut zwischen zwei benachbarten Bohrungen 21, wie dies im Bereich 25 dargestellt ist, bzw. lassen die Verbindungsnut, wie im Bereich 27 dargestellt, offen, so dass, konstruktiv einfach, ein mäanderförmiges Leitungssystem entlang insbesondere des Dichtungsbereiches 11 der Gleitlagerbüchse 9 entsteht.

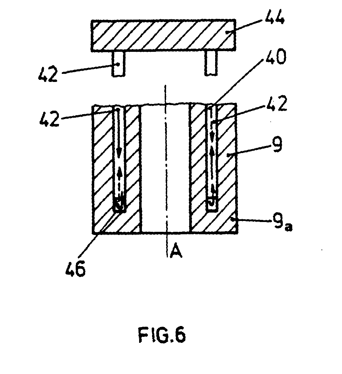

Eine weitere Möglichkeit, an der Gleitlagerbüchse der erfindungsgemässen Zahnradpumpe ein mäanderförmiges Leitungssystem für das Temperiermedium vorzusehen, ist in Fig. 6 dargestellt. Diese Ausführungsform hat gegenüber der anhand von Fig. 2 erläuterten den grossen Vorteil, dass keinerlei Schweissverbindungsnähte an der dem Förderraum zugekehrten Stirnseite der Büchse vorzusehen sind. Gemäss Fig. 6 werden in die Lagerbüchse 9, von der dem Förderraum abgewandten Stirnseite her, Sackbohrungen 40 regelmässig verteilt und parallel zur Achse A eingebohrt. Von der dem Förderraum abgewandten Stirnseite her werden dann in die Sackbohrungen 40 Unterteilungsbleche 42 eingelassen, welche an einer stirnseitigen Abschlussplatte 44 befestigt sind. Indem die Bleche 42 so dimensioniert sind, dass sie im Basisbereich 46 der Sackbohrungen einen Durchtritt offenlassen, werden durch diese Bleche 42 die Sackbohrungen 40 je in zwei Kanäle unterteilt, welche im Basisbereich 46 kommunizieren. Die Platte 44 ihrerseits wird mit dem Grundkörper 9a verschweisst, an der dem Förderraum der Pumpe abgewandten Seite der Büchse 9.

Wie aus Fig. 1 ohne weiteres ersichtlich und gestrichelt bei 29 dargestellt, kann die Gleitlagerbüchse auch den geschlossenen Abschlussdeckel für das Lager einer nicht durchgeführten Welle bilden. Dann entfällt der Dichtungsbereich 13 und die Durchführungsbohrung in der Gleitlagerbüchse 9.

Bei der Ausführungsform gemäss Fig. 3 ist, im Unterschied zur Ausführungsform nach Fig. 1, die Welle 1 nicht in die Umgebung durchgeführt. Gleichermassen wie bei der Ausführung nach Fig. 1, ist aber die Gleitlagerbüchse 9, nun ohne Dichtungsbereich, einteilig ausgebildet und kommuniziert mit der Umgebung U, wo die Anschlüsse 19 für das Temperiermedium-Leitungssystem mit den Bohrungen 21 angeordnet sind.

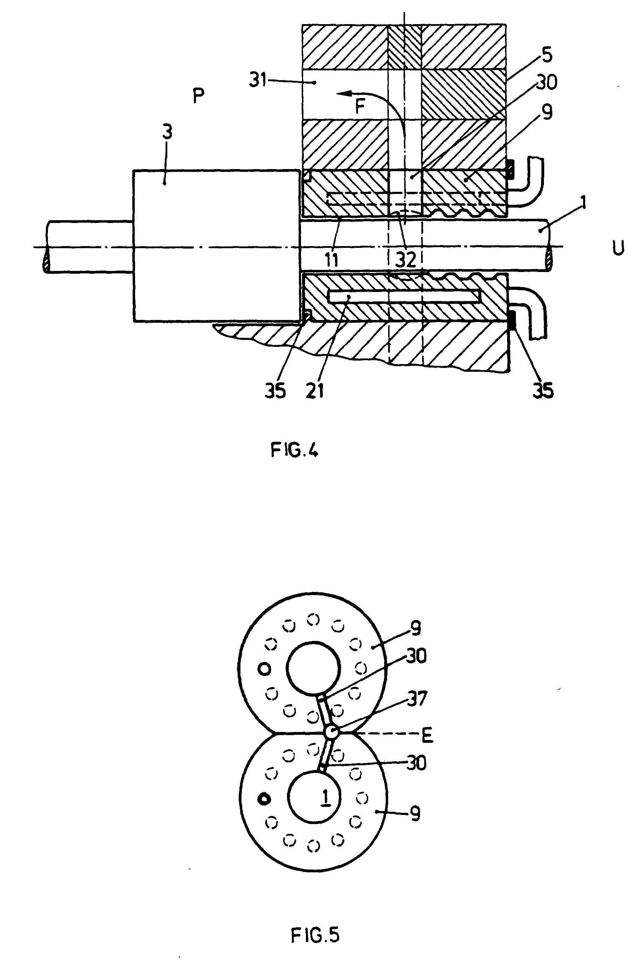

Sowohl bei der Ausführungsform nach Fig. 1 wie auch nach derjenigen nach Fig. 3 werden die Gleitlager üblicherweise Fördermedium-geschmiert. Um dabei keinen Förderstromverlust in Kauf nehmen zu müssen, wird in der Büchse 9, gemäss Ausführungsform von Fig. 4, bei Durchführung der Welle 1 in die Umgebung nach dem Gleitlagerbereich 11, eine im wesentlichen radial gerichtete Bohrung 30 durch die Büchse 9 vorgesehen, welche über eine Verbindungsleitung 31 im Gehäuse 5 der Pumpe mit dem Förderraum P der Pumpe kommuniziert, insbesondere deren Niederdruckseite.

Um dabei, wie mit dem Pfeil F dargestellt, die Rückführung des als Schmiermedium zur Wirkung gekommenen Fördermediums optimal sicherzustellen, wird in der Büchse 9 im Bereich der Bohrung 13 eine Ringnut 32 eingearbeitet.

Bei Ausführungsformen gemäss den Fig. 3 und 4, bei denen die erfindungsgemäss vorgesehene Gleitlagerbüchse 9 mit integriertem Temperiermedium-Leitungssystem ohne Abschlussflansch bzw. Abschlussdeckel ausgebildet ist, wird durch entsprechende Formgebung der Aussenfläche der Gleitlagerbüchsen 9 Verdrehsicherung erreicht und, wie schematisch in Fig. 4 bei 35 dargestellt, die axiale Halterung durch einfache Spanner und auf-Anschlag-Führen der Gleitlagerbüchsen 9 erreicht.

Wenn mindestens einseitig die Wellen beider Zahnradrotoren erfindungsgemäss gleitgelagert werden sollen, insbesondere mit Fördermedium-geschmierten Gleitlagern, wird dies bevorzugterweise wie in Fig. 5 schematisch dargestellt realisiert. Durch Abplatten der Gleitlagerbüchsen 9 wird im wesentlichen entlang einer Ebene E zwischen den Wellen 1 die Verdrehsicherung der beiden Büchsen 9 erreicht. Die zur Rückführung der Schmierströmung vorgesehenen, im wesentlichen radial gerichteten Bohrungen 30 werden gemeinsam in einem Rückführkanal 37 geführt, welch letzterer durch Einarbeitung im wesentlichen achsparalleler Nuten je in die beiden aneinanderliegenden planen Flächen der jeweiligen Gleitlagerbüchsen 9 realisiert wird. Selbstverständlich ist in dem in Fig. 1 dargestellten Fall normalerweise die eine Gleitlagerbüchse 9 als Durchführung für die Welle 1 ausgebildet, die andere, gemäss Fig. 3, als Lagerabschlusskörper.

Mit der erfindungsgemässen Zahnradpumpe wird auf höchst einfache Art und Weise die Kühlung insbesondere des Gleitlagerbereiches einer gleitgelagerten Zahnradrotorwelle an einer Zahnradpumpe erreicht, ohne dass irgendwelche Dichtungsprobleme zu lösen wären. Das Leitungssystem an der Gleitlagerbüchse 9 wird von aussen direkt angeschlossen an ein Förderaggregat (nicht dargestellt) für ein Temperier-, üblicherweise ein Kühlmedium. Dabei werden Toleranzen bezüglich axialem Sitz der Lagerbüchsen im Gehäuse bezüglich Abdichtung des Temperierleitungssystems unwesentlich.

## Patentansprüche

1. Zahnradpumpe mit zwei Rotoren (3), wovon die Welle (1) des einen mindestens einseitig gleitgelagert ist, **dadurch gekennzeichnet, dass** die gehäuseseitige Gleitlagerbüchse (9) sich einteilig axial an die Pumpenaussenumgebung (U) erstreckt und ein Temperiermedium-Leitungssystem (17) in der Lagerbüchse (9) vorgesehen ist mit mindestens einem Paar Ein- und Auslässe an der Gleitlagerbüchse, welche an der Pumpenaussenumgebung (U) freiliegen.

2. Zahnradpumpe nach Anspruch 1, **dadurch gekennzeichnet, dass** die Gleitlagerung (11) Fördermedium-geschmiert ist und hierzu ein Fliessweg für das Fördermedium axial zwischen Rotorwelle (1) und Bohrung der Lagerbüchse (9) vorgesehen ist.

3. Zahnradpumpe nach einem der Ansprüche 1 oder 2, **dadurch gekennzeichnet, dass** die Welle (1) durch das Gleitlager hindurch in die Pumpenumgebung (U) durchgeführt ist.

4. Zahnradpumpe nach einem der Ansprüche 1 bis 3, **dadurch gekennzeichnet, dass** das Temperiermedium-Leitungssystem (17) sich mäanderförmig entlang des Lagerbereiches der Lagerbüchse erstreckt.

5. Zahnradpumpe nach einem der Ansprüche 1 bis 4, **dadurch gekennzeichnet, dass** die einteilige Lagerbüchse einen Grundkörper (9_{g}) und je eine stirnseitige, damit unlösbar verbundene, wie beispielsweise damit verschweisste Stirnplatte (9ₐ) umfasst, dass das mäanderförmige Leitungssystem gebildet ist durch beidseits durchgehende, achsparallele Bohrungen (21) im Grundkörper (9_{g}) sowie diese Bohrungen stirnseitig abwechselnd verbindende Nuten (23), wobei die Stirnplatten (9ₐ) die Verbindungsnuten (23) und die im Grundkörper durchgehenden Axialbohrungen (21) verschliessen.

6. Zahnradpumpe nach einem der Ansprüche 1 bis 4, **dadurch gekennzeichnet, dass** die einteilige Lagerbüchse einen Grundkörper (9a) umfasst, woran achsparallele Sackbohrungen (42), verteilt, vorgesehen sind sowie eine stirnseitige, mit dem Grundkörper unlösbar verbundene Stirnplatte (44), woran die Sackbohrungen längs-unterteilende Bleche (42) vorgesehen sind, deren Axialausdehnung kürzer ist als diejenige der Sackbohrungen.

7. Zahnradpumpe nach einem der Ansprüche 1 bis 6, **dadurch gekennzeichnet, dass** die Welle durch das Gleitlager in die Umgebung durchgeführt ist und die Lagerbüchse einen förderraumseitigen Gleitlagerbereich (11) sowie einen axial nach aussen anschliessenden Dichtungsbereich (13) aufweist, vorzugsweise Labyrinthdichtungsbereich.

8. Zahnradpumpe nach einem der Ansprüche 1 bis 7, **dadurch gekennzeichnet, dass** die Lagerbüchse einteilig in einen auskragenden Montageflansch mit oder ohne Durchführungsbohrung übergeht.

9. Zahnradpumpe nach Anspruch 2, **dadurch gekennzeichnet, dass**, vom Förderraum nach aussen fortschreitend, nach einem Lagerbereich (11) der Lagerbüchse, mindestens eine im wesentlichen radial gerichtete Bohrung (30) durch die Lagerbüchse mit dem Förderraum (P) der Pumpe kommuniziert für die Rückführung der Gleitlager-Schmierströmung in den Förderraum.

10. Zahnradpumpe nach einem der Ansprüche 1 bis 9, **dadurch gekennzeichnet, dass** mindestens einseitig beide Wellen der Rotoren in je einer der Lagerbüchsen gelagert sind, die sich gegenseitig verdrehsichern.

11. Zahnradpumpe nach Anspruch 10, **dadurch gekennzeichnet, dass**, vom Pumpenförderraum nach aussen fortschreitend, nach Lagerbereichen der Lagerbüchsen, je eine im wesentlichen radial gerichtete Bohrung (30) in den Büchsen vorgesehen ist, welche ineinandermünden und gemeinsam mit dem Pumpenförderraum über eine vorzugsweise im wesentlichen wellenachsparallele Leitung (37) verbunden sind.

12. Zahnradpumpe nach Anspruch 11, **dadurch gekennzeichnet, dass** die beiden Lagerbüchsen entlang im wesentlichen planer, achsparalleler Flächen (E) zwischen den Wellen aneinanderliegen und die im wesentlichen achsparallele Leitung (37) zum Pumpenförderraum durch je in die Flächen (E) eingearbeitete Nuten gebildet ist.

## Claims

1. Gear pump with two rotors (3), of which the shaft (1) of one is mounted on slide bearings on at least one side, **characterised in that** the slide bearing bush (9) on the housing side extends as one piece axial to the pump external environment (U) and a tempering medium line system (17) is provided in the bearing bush (9) with at least one pair of inlet and outlets on the slide bearing bush which open into the pump external environment (U).

2. Gear pump according to claim 1, **characterised in that** the slide bearing (11) is lubricated with transport medium and for this a flow path for the transport medium is provided axially between the rotor shaft (1) and the bore of the bearing bush (9).

3. Gear pump according to claim 1 or 2, **characterised in that** the shaft (1) passes through the plain bearing into the pump environment (U).

4. Gear pump according to any of claims 1 to 3, **characterised in that** the tempering medium line system (17) extends meandering along the bearing area of the bearing bush.

5. Gear pump according to any of claims 1 to 4, **characterised in that** the one-piece bearing bush comprises a base body (9_{g}) and on each end a face plate (9ₐ) captively connected such as for example welded to this, that the meandering line system is formed by axis-parallel through bores on both sides in the base body (9_{g}) and grooves (23) connecting these bores alternately at the ends, where the face plates (9ₐ) close the connection grooves (23) and the through axial bores (21) in the base body.

6. Gear pump according to any of claims 1 to 4, **characterised in that** the one-piece bearing bush comprises a base body (9ₐ) on which are provided distributed axis-parallel blind bores (42) and on the end captively connected with the base body a face plate (44) on which are provided plates (42) dividing the blind bores longitudinally, where the axial extension of which is shorter than that of the blind bores.

7. Gear pump according to any of claims 1 to 6, **characterised in that** the shaft passes through the slide bearing into the environment and the bearing bush has a plain bearing area (11) on the pressure chamber side and axially adjacent on the outside a sealing area (13), preferably a labyrinth sealing area.

8. Gear pump according to any of claims 1 to 7, **characterised in that** the bearing bush transforms as one piece into a projecting assembly flange with or without through bore.

9. Gear pump according to claim 2, **characterised in that** progressing outward from the pressure chamber, after a bearing area (11) of the bearing bush at least one bore (30) aligned essentially radially through the bearing bush communicates with the pressure chamber (P) of the pump to return the slide bearing lubricant flow into the pressure chamber.

10. Gear pump according to any of claims 1 to 9, **characterised in that** on at least one side the two shafts of the rotors are each mounted in one of the bearing bushes which secure each other against twisting.

11. Gear pump according to claim 10, **characterised in that** progressing outward from the pump pressure chamber, after the bearing areas of the bearing bushes, in each case in the bushes is provided a bore (30) aligned essentially radially which open into each other and are together connected with the pump pressure chamber by a line (37) preferably essentially parallel to the shaft axis.

12. Gear pump according to claim 11, **characterised in that** the two bearing bushes lie next to each other along essentially flat axis-parallel surfaces (E) between the shafts and the essentially axis-parallel line (37) to the pump pressure chamber is formed by the grooves machined into the surfaces (E).

## Revendications

1. Pompe à engrenages avec deux rotors (3), l'arbre (1) de l'un des rotors étant monté sur palier lisse au moins sur un côté, **caractérisée en ce que** le coussinet lisse (9) prévu côté carter s'étend en une seule pièce axialement jusqu'à l'environnement extérieur (U) de la pompe, et il est prévu dans le coussinet lisse (9) un système de conduites d'agent d'équilibrage de température (17) avec au moins une paire d'entrées et de sorties, sur ledit coussinet, qui sont exposées à l'environnement extérieur (U) de la pompe.

2. Pompe à engrenages selon la revendication 1, **caractérisée en ce que** le palier lisse (11) est lubrifié par un produit refoulé, et il est prévu à cet effet une voie d'écoulement pour ledit produit, axialement entre l'arbre de rotor (1) et l'alésage du coussinet (9).

3. Pompe à engrenages selon la revendication 1 ou 2, **caractérisée en ce que** l'arbre (1) traverse le palier lisse jusque dans l'environnement (U) de la pompe.

4. Pompe à engrenages selon l'une des revendications 1 à 3, **caractérisée en ce que** le système de conduites d'agent d'équilibrage de température (17) s'étend suivant une forme sinueuse le long de la zone d'appui du coussinet.

5. Pompe à engrenages selon l'une des revendications 1 à 4, **caractérisée en ce que** le coussinet d'une seule pièce comprend un corps de base (9_{g}) et des plaques frontales (9ₐ) reliées à celui-ci de manière non amovible, par exemple par soudage, et **en ce que** le système de conduites sinueux est formé par des perçages traversants (21) parallèles à l'axe, des deux côtés, prévus dans le corps de base (9_{g}), et par des rainures (23) qui relient ces perçages en alternance, côté frontal, les plaques frontales (9ₐ) obturant les rainures de liaison (23) et les perçages axiaux traversants (21) prévus dans le corps de base.

6. Pompe à engrenages selon l'une des revendications 1 à 4, **caractérisée en ce que** le coussinet d'une seule pièce comprend un corps de base (9a) sur lequel sont répartis des perçages borgnes (42) parallèles à l'axe, et une plaque frontale (44) qui est prévue côté frontal, qui est reliée au corps de base de manière inamovible et sur laquelle sont réparties des tôles (42) qui divisent les perçages borgnes longitudinalement et dont l'extension axiale est plus courte que celle des perçages borgnes.

7. Pompe à engrenages selon l'une des revendications 1 à 6, **caractérisée en ce que** l'arbre traverse le palier lisse jusque dans l'environnement et le coussinet comporte une zone de palier lisse (11) située côté refoulement et une zone d'étanchéité (13) située dans le prolongement axial vers l'extérieur, de préférence une zone d'étanchéité à labyrinthe.

8. Pompe à engrenages selon l'une des revendications 1 à 7, **caractérisée en ce que** le coussinet se prolonge d'une seule pièce par une bride de montage en saillie avec ou sans perçage de passage.

9. Pompe à engrenages selon la revendication 2, **caractérisée en ce qu'**après une zone d'appui (11) du coussinet, de la zone de refoulement vers l'extérieur, au moins un perçage (30), dirigé sensiblement radialement, du coussinet communique avec l'espace de refoulement (P) de la pompe pour ramener le courant de lubrifiant de palier lisse dans ladite zone de refoulement.

10. Pompe à engrenages selon l'une des revendications 1 à 9, **caractérisée en ce que** les deux arbres des rotors, au moins d'un côté, sont montés dans les coussinets respectifs qui s'immobilisent mutuellement en rotation.

11. Pompe à engrenages selon la revendication 10, **caractérisée en ce qu'**après des zones d'appui des coussinets, de l'espace de refoulement de la pompe vers l'extérieur, il est prévu dans les coussinets des perçages respectifs (30), dirigés sensiblement radialement, qui débouchent l'un dans l'autre et qui sont reliés conjointement à l'espace de refoulement par l'intermédiaire d'une conduite (37) de préférence sensiblement parallèle à l'axe de l'arbre.

12. Pompe à engrenages selon la revendication 11, **caractérisée en ce que** les deux coussinets sont appliqués l'un contre l'autre le long de surfaces (E) sensiblement planes et parallèles à l'axe, entre les arbres, et la conduite (37), sensiblement parallèle à l'axe, qui mène à l'espace de refoulement de la pompe est définie par des rainures réalisées dans les surfaces (E) respectives.
